# EUROPEAN PATENT APPLICATION

(11) **EP 2 166 442 A1**
(43) Date of publication of application: **24.03.2010**
(21) Application number: 09006868.5
(22) Date of filing: 21.05.2009
(51) Int. Cl.: G06F 3/048

(54) **User interface method**

(30) Priority: 03.09.2008 KR 20080086951
(71) Applicant: Ahn Kong-hyuk, Gangnamgu, 135-100 (KR)
(72) Inventor: Ahn Kong-hyuk, Gangnamgu, 135-100 (KR)
(74) Representative: Keilitz, Wolfgang

(57) **Abstract**

The present invention relates to a user interface method of a terminal, more specifically to a user interface method of a terminal that can recognize the track of a touch stroke by user and process the user command on the basis of this touch track.

A user interface method according to an embodiment of the present invention includes the steps of: searching a touch-track-to-key value table, stored in a terminal; checking the track of a touch stroke of user if the touch of user starts at one of outer vertices predetermined by the terminal, and passes through a center point predetermined by the terminal surrounded by these outer vertices, and ends at one of these outer vertices; and processing a user command corresponding to the checked key value according to the touch track so generated.

## Description

### CROSS-REFERENCE TO RELATED APPLICATIONS

This application claims the benefit of Korean Patent Application No. 10-2008-0086951, filed with the Korean Intellectual Property Office on September 03, 2008, the disclosure of which is incorporated herein by reference in its entirety.

### BACKGROUND

### 1. Technical Field

The present invention relates to a user interface method of a terminal apparatus, more specifically to a user interface method that can recognize the track and the direction of a touch by a user and process the user's command on the basis of this information.

### 2. Description of the Related Art

Usually, an input device of a terminal apparatus employs a keyboard, a keypad, a touch pad, a touch screen, or any combinations of these. A user can input characters into the terminal or control the operations of various programs installed in the terminal by using one of these input devices. Here, the characters collectively refer to not only phonetic symbols but also numerals and meta-characters.

On the other hand, small form-factor hand-held devices such as mobile phones, PDAs, and MP3 players require an input device or a method which takes up less space. To meet this requirement, such a device has to employ an input device that is small in size. The size limitation of the input device in turn makes the input operation cumbersome and inefficient in many cases. For example, the keypad of a mobile phone has only a limited number of buttons, twelve for example, with which, in case of the Roman alphabets, twenty-six characters must be accommodated. Consequent pressing of a button more than once to select a character among the plurally assigned characters to the button is not efficient for optimal operation of an input device.

In some devices, touch screens are used as alternative input devices by displaying an on-screen keyboard. However, due to the tight overall size requirement, the size of an on-screen keyboard has to be quite smaller than a full size keyboard. Coupled with the lack of tactile feedback, the on-screen keyboard does not provide an optimal convenience to the users.

### SUMMARY

The present invention, which is contrived to solve the aforementioned problems, provides a user interface method on the basis of recognizing the track and direction of a touch stroke executed by a user on a touch screen or touch pad embedded into a terminal device.

In accordance with an embodiment of the present invention, a user interface method, which is executed by a terminal having a touch input device providing the information of the track and direction of a touch stroke executed by a user to the terminal, includes the steps of: identifying a touch-track by the user; executing a touch stroke along a graphically laid out plan comprising of a set of outer vertices, one center point (center vertex) surrounded by a set of aforementioned outer vertices, and a set of edges (guidelines) connecting the outer vertices to the center point as well as to one another in such a manner that the touch stroke by the user starts at one of the outer vertices and passes through the center point and finally ends at one of the outer vertices along the guidelines connecting these points; searching a touch-track-to-key value table stored in the terminal; and processing a user command corresponding to the checked key value according to the generated touch track.

If the checked key value retrieved from the touch-track-to-key value table is a character, then the character is entered and displayed on the touch screen.

When a touch screen is used as an input device, the center point, the outer vertices and the edges (guidelines) connecting the outer vertices with the center point and to each other can be displayed on the touch screen.

When a touch pad is used as an input device, the center point, the outer vertices and the edges (guidelines) connecting the outer vertices with the center point and to each other can be displayed on the touch pad in a form of an image or formed as protruding lines on the surface of the touch pad to provide tactile guidelines.

In accordance with another embodiment of the present invention, a user interface method, which is executed by a terminal having a touch input device providing the information of the track and direction of a touch stroke executed by a user to the terminal, includes the steps of: identifying the touch-track by the user, which is generated by the user; executing a touch stroke along the aforementioned graphically laid out plan in such a manner that the touch stroke by the user starts at one of the outer vertices and ends in another outer vertex without passing the center point; searching a touch-track-to-key value table, stored in the terminal; and processing a user command corresponding to the checked key value according to the generated touch track.

Thus, in the touch-track-to-key value table, a character key value can be assigned to the touch tracks passing through the center point and a non-character key value can be assigned to the touch tracks not passing through the center point but rather connecting two outer vertices.

When a touch screen is used as an input device, the center point, the outer vertices, the edges connecting the outer vertices with the center point, and the edges connecting outer vertices to other outer vertices are displayed on the touch screen as guidelines for a touch stroke.

When a touch pad is used as an input device, the center point, the outer vertices, the edges connecting the outer vertices with the center point, and the edges connecting outer vertices to other outer vertices are displayed on the touch pad as guidelines for a touch stroke.

For another embodiment wherein a touch pad is used as an input device, the center point, the outer vertices, the edges connecting the outer vertices with the center point, and the edges connecting outer vertices to other outer vertices are displayed in a form of an image or formed as protruding lines or etched grooves on the surface of the touch pad as guidelines for a touch stroke.

### BRIEF DESCRIPTION OF THE DRAWINGS

FIG. 1 is a perspective view showing the appearance of a mobile communication terminal to which a user interface method on the basis of recognizing touch track can be applied in accordance with an embodiment of the present invention;
FIG. 2 is a perspective view showing the appearance of a laptop computer to which a user interface method on the basis of recognizing touch track can be applied in accordance with an embodiment of the present invention;
FIG. 3 is a block diagram showing the structure of a terminal that can use a user interface method on the basis of recognizing touch track in accordance with an embodiment of the present invention;
FIG. 4 is a flowchart showing a user interface method on the basis of recognizing touch track in accordance with an embodiment of the present invention; and
FIG. 5 through FIG. 8 are conceptual views showing a user interface method on the basis of recognizing touch track in accordance with an embodiment of the present invention.

### DETAILED DESCRIPTION

Hereinafter, a user interface method on the basis of recognizing touch track in accordance with an embodiment of the present invention will be described with reference to the accompanying figures.

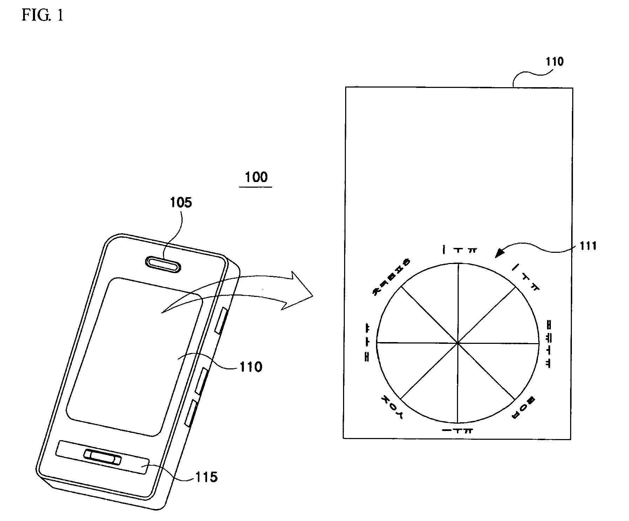

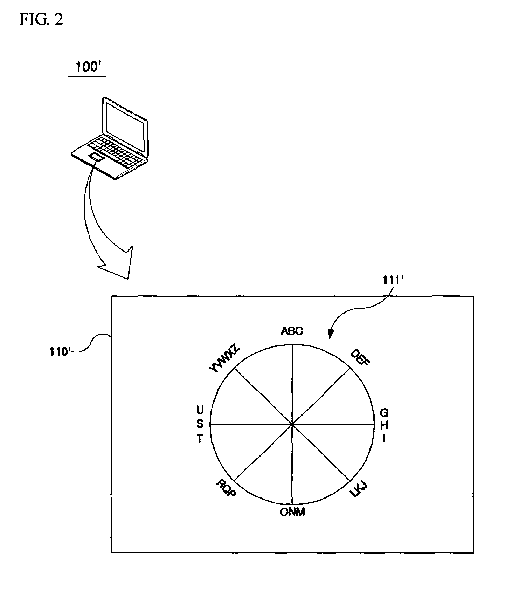

FIG. 1 and FIG. 2 are perspective views showing the appearances of a mobile communication terminal and a laptop computer, respectively, to which a user interface method on the basis of recognizing touch track can be applied in accordance with an embodiment of the present invention. Of course, the appearances of the terminals shown in FIG. 1 and FIG. 2 are not limited to the present invention. The present invention can be applied to a variety of apparatuses such as PDAs, MP3 players, electronic dictionaries, remote controls, Internet tablets and GPS-navigation devices.

As shown in FIG. 1, a main circuit and an antenna can be mounted inside a mobile communication terminal 100 to which the present invention is applicable, and a touch screen 110 and a keypad 115 can be arranged in the front of the mobile communication terminal 100.

A speaker hole 105, electrically connected to an inner speaker (not shown), and a microphone hole (not shown), electrically connected to an inner microphone (not shown), can be also mounted in the front of the mobile communication terminal 100.

For example, a camera lens (not shown) and a flash light for night photography are mounted at an upper back side of the mobile communication terminal 100.

The touch screen 110 can display a guideline 111 for guiding touch strokes executed by users for character inputs.

As shown in FIG. 2, a touch pad 110' can be mounted instead of a pointing device such as a mouse and a joy stick on a laptop computer 100' to which the present invention is applicable.

Similarly, the touch pad 110' can display a guideline 111' for guiding touch strokes executed by users for character inputs. At this time, a part corresponding to the guideline 111' can be embossed or depressed on a surface of the touch pad 110'.

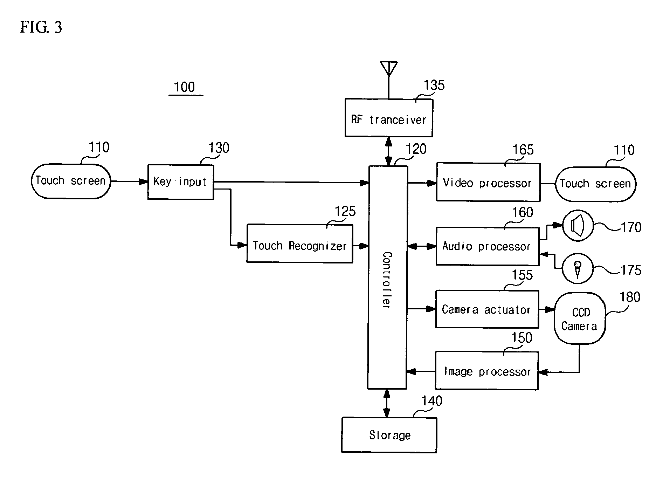

FIG. 3 is a block diagram showing the structure of a terminal that can use a user interface method on the basis of recognizing touch track in accordance with an embodiment of the present invention.

As shown in FIG. 3, the mobile communication terminal 100, in accordance with an embodiment of the present invention, can include a key input unit 130, a touch recognizer 125, an RF transceiver 135, a storage 140, a video processor (165), an audio processor 160, a camera actuator 155, an image processor 150, and a controller 120.

In particular, the key input unit 130 can generate a corresponding touch signal if a user touches the touch screen 110 (or the touch pad 110') by using his or her fingers or a stylus pen. The key input unit 130 can also generate a corresponding key signal if a user manipulates the key pad 115.

Next, the touch recognizer 125 recognizes a position of a touch by a user on the touch screen 100 by analyzing the touch signal inputted at 120 as a mean to recognize the touch track and the touch direction.

If the touch of a user starts at one of the outer vertices pre-laid out by the terminal 100, passes through the center point surrounded by the outer vertices, and ends at one of the outer vertices, the touch recognizer 125 can recognize the touch track of the user as making one stroke. Here, the center point and the outer vertices are located on the aforementioned guideline 111 (or 111').

If the touch of user starts at one of outer vertices and ends at another of the outer vertices without passing through the center point, the touch recognizer 125 can also recognize the touch track of user as making one stroke.

The RF transceiver 135 can receive or transmit a wireless frequency signal from or to a base station through an antenna, under the control of the controller 120. The storage 140 stores data generated in the operating system (OS) of a terminal, various kinds of application programs, calculating processes of the controller 120, data determined by a user, and a touch-track-to-key value table. Here, in the touch-track-to-key value table, one character key or one non-character key corresponds to one stroke as defined by the touch track of a user. The non-character keys refer to keys such as Ctrl, Alt, Shift, Enter, Tap, and Korean-English conversion, etc. As well known, these non-character keys are used to change the original functions of keys, to control the operations of programs, or to move text or cursor on the display.

The video processor 165 can process a video signal to enable a corresponding video to be outputted on the touch screen 110 under the control of the controller 120.

The audio processor 160 can convert an analog voice signal inputted from a microphone 175 to a corresponding digital voice signal and a digital voice signal to a corresponding analog voice signal to output the converted signal to a speaker 170.

The camera actuator 155 can actuate a CCD camera 180 under the control of the controller 120, and the image processor 150 can process image data outputted from the CCD camera 180.

The controller 120 of the terminal 100 handles a touch signal or a key signal, generated by the key input 130, or an RF signal inputted from the RF transceiver 135. In particular, the controller 120 can search the touch-track-to-key value table to check a key value corresponding to the track and the direction of one stroke recognized by the touch recognizer 125 and control the video processor 165, the RF transceiver 135, the audio processor 160 or the camera actuator 155 to process a user command corresponding to the checked key value. For example, the controller 120 can control the video processor 165 to display a certain character or to change the screen displayed on the touch screen 110. The controller 120 can also control the RF transceiver 135 to make a call having the phone number corresponding to the checked key values.

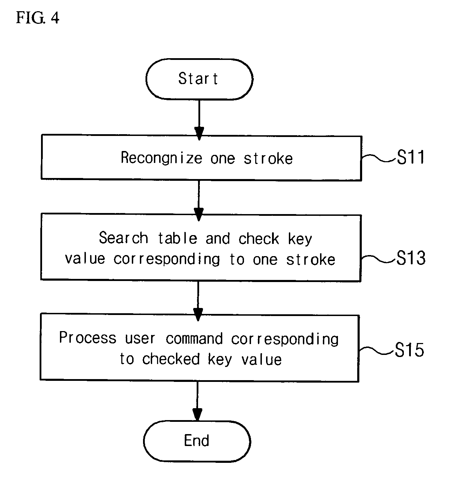

FIG. 4 is a flowchart showing a user interface method on the basis of recognizing touch track in accordance with an embodiment of the present invention. At this time, the user interface method can be executed by the aforementioned terminals 100 and 100'.

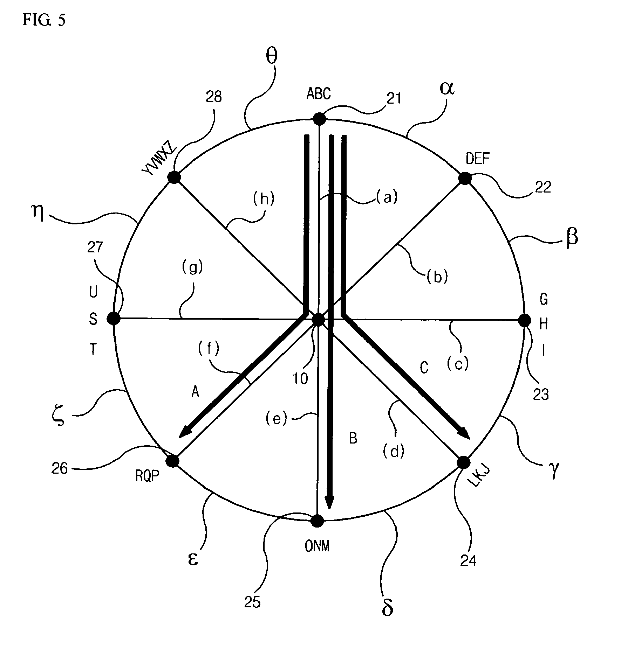

FIG. 5 through FIG. 8 are conceptual views showing a user interface method on the basis of recognizing touch track in accordance with an embodiment of the present invention. As shown in FIG. 5 through FIG. 8, the controller 120 can control the video processor 165 to display on the touch screen 110 a set of outer vertices 21 through 28, a center point 10 located within a closed loop connecting the outer vertices 21 through 28, guidelines a through h connecting the center point 10 and the outer vertices 21 through 28, and guidelines "α" through "0" connecting the adjacent outer vertices. Alternatively, the points and the guidelines shown in FIG. 5 through FIG. 8 can be drawn or embossed on the touch pad 110'.

As shown in FIG. 4, an operation represented by S11 can recognize a touch of user as making one stroke if the touch of user starts at one of the set of outer vertices 21 through 28, passes through the center point 10, and ends at one of the set of outer vertices 21 through 28.

Next, an operation represented by S 13 can search the touch-track-to-key value table to check a key value corresponding to the track of the stroke recognized in the operation represented by S 11.

Hereinafter a first preferred embodiment of this invention on the basis of FIG. 5 will be described. If a touch starts at an outer vertex 21 and follows a guideline (a) before passing through the center point 10 and then follows the guideline (f) and ends at an outer vertex 26, a key value corresponding to the track and the direction of the stroke will be a character "A." If a touch moves along the route "21 → (a) → 10 → (e) → 25," a corresponding key value will be a character "B." Similarly, if a touch moves along the route "21 → (a) → 10 → (d) → 24," a corresponding key value will be a character "C."

In brief, in order to input A, B, or C, a touch starts from the outer vertex 21. Similarly, in order to input D, E, or F, a touch starts from the outer vertex 22. For inputs G, H, or I; L, K, or J; O, N, or M; R, Q, or P; U, S, or T; or Y, V, W, or Z, a touch starts from the outer vertex 23, 24, 25, 26, 27, or 28, respectively. As a result, a user can input any one of the 26 alphabets by making one stroke.

Here, it is considered as one of good examples that the controller 120 controls the video processor to display key values corresponding to the strokes that starts at an outer vertex at the areas near the outer vertex on the touch screen 110. This enables a user to easily recognize from which outer vertex a touch should be started in order to input a desired key value.

For example, by looking at the characters "ABC" displayed above the outer vertex 21 as shown in FIG. 5, it is easily recognized that A is displayed at the left side of B and C is displayed at the right side of B. Accordingly, a user can intuitively recognize that if a touch stroke of the user makes a straight line only up to the center point 10 in FIG. 5, and then deviates one vertex to the left (since A is one unit left of B), A will be inputted, if the stroke of the user is made in a straight line all the way passing through the center point 10, B will be inputted, and if the stroke of the user is straight line only up to the center point 10 and deviates one unit to the right from then on (since C is one unit right of B), C is inputted.

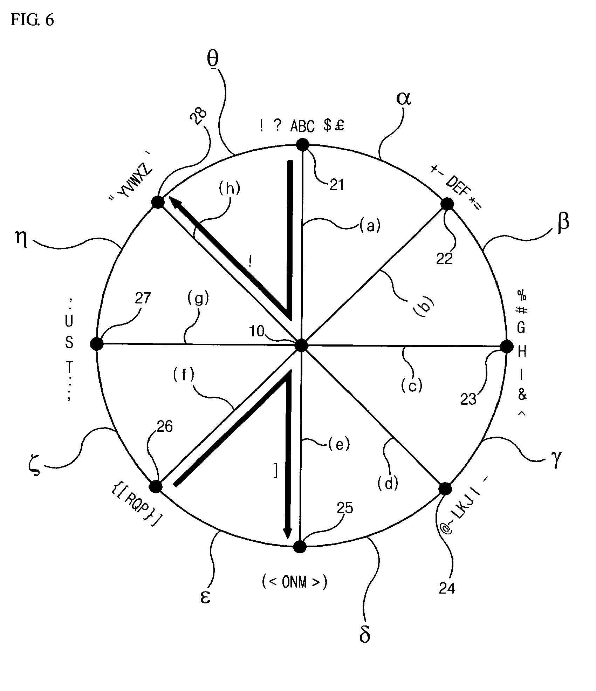

Hereinafter a second preferred embodiment of this invention on the basis of FIG. 6 will be described. If a touch moves along the route "21 → (a) → 10 → (h) → 28," a corresponding key value will be a character "!". Similarly, if a touch moves along the route "26 → (f) → 10 → (e) → 25," a corresponding key value will be a character "]". As a result, a user can input any one of the 26 alphabets and various meta-characters by making just one stroke.

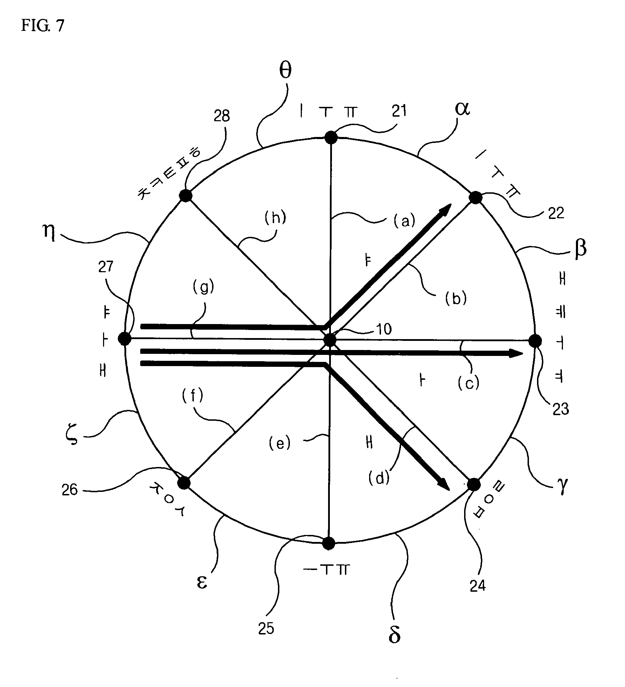

Hereinafter a third preferred embodiment of this invention on the basis of FIG. 7 will be described. If a touch moves along the route "27 → (g) → 10 → (b) → 22," a corresponding key value will be a Korean character " 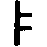 ". If the touch of user moves at points "27 → (g) → 10 → (c) → 23," a corresponding key value will be a Korean character " ⊦". Similarly, if a touch moves along the route "27 → (g) → 10 → (d) → 24," a corresponding key value will be a Korean character " 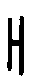 ". As a result, a user can input any one of 27 Korean characters by making one stroke.

In general, if the number of the outer vertices is N, it is possible to input any one of the "N*(N-1)" key values at the maximum by making one stroke. For example, if the number of the outer vertices is 8, it is possible to input any one of the "8*7 (i.e. 56)" key values at the maximum by making one stroke.

If the touch of user that starts and ends at the same point is recognized as one stroke, it is possible to input any one of the "N*N" key values at the maximum by making one stroke.

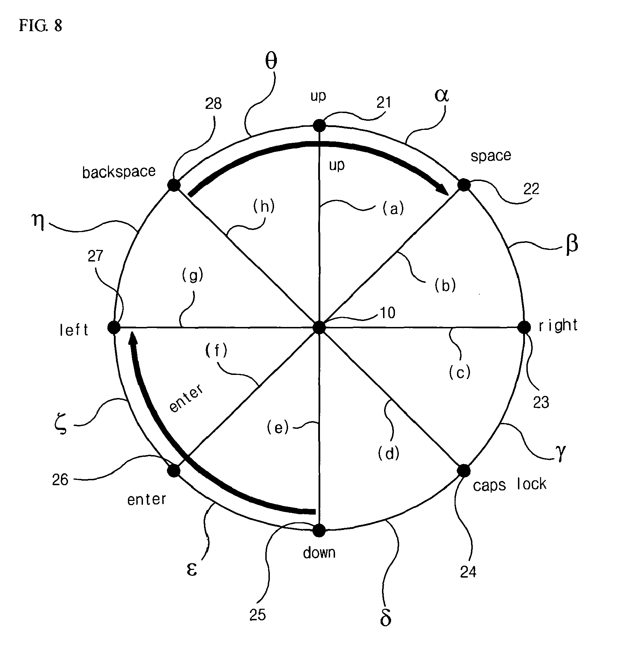

Hereinafter a fourth preferred embodiment of this invention on the basis of FIG. 8 will be described. If a touch moves along the route "28 → θ → 21 → α → 22," a corresponding key value will be a direction key "UP." Similarly, if a touch of user moves along the route "25 → ε → 26 → ζ → 27," a corresponding key value will be the key "ENTER." As a result, if a user makes one stroke according to the outer guidelines α through 0, the non-character keys can be inputted.

Returning to FIG. 4, an operation represented by S 15 can process a user command corresponding to the key value checked in the operation represented by S 13. For example, the terminal 100 can display a character, convert the screen displayed on the touch screen 110 to a certain screen, or make a call having a phone number corresponding to the key value.

The drawings and detailed description are only examples of the present invention, and serve only for describing the present invention and by no means limit or restrict the spirit and scope of the present invention. Thus, any person of ordinary skill in the art shall understand that a large number of permutations and other equivalent embodiments are possible. The true scope of the present invention must be defined only by the spirit of the appended claims.

## Claims

1. A user interface method, which is executed by a terminal having a touch input device that recognizes a series of touch positions (or touch track) on said input device operated by said user, comprising the steps of:
searching a touch-track-to-key value table, stored in said terminal based on said track of a touch stroke, if said touch starts at one of outer vertices pre-laid out on said touch input device of said terminal, and passes through a center point also pre-laid out on said touch input device of said terminal surrounded by said outer vertices, and ends at one of said outer vertices; and processing a user command corresponding to checked key value corresponding to said track.

2. A user interface method of Claim 1, wherein a character is displayed in said processing step if said checked key value is a character in said searching step.

3. A user interface method of Claim 1, wherein said touch input device is a touch screen, and said center point and the set of said outer vertices are displayed on said touch screen.

4. A user interface method of Claim 3, wherein guidelines connecting said center point with said outer vertices are displayed on said touch screen.

5. A user interface method of Claim 1, wherein said touch input device is a touch pad, and said center point and said outer vertices are displayed on said touch pad.

6. A user interface method of Claim 5, wherein said guidelines connecting said center point with said outer vertices are displayed on said touch pad.

7. A recorded medium recorded with a program for executing said user interface method in accordance with any one of Claims 1 through 6, said recorded medium being readable by a computer.

8. A user interface method, which is executed by a terminal having a touch input device that recognizes a position of said touch input device touched by a user, comprising the steps of:
searching a touch-track-to-key value table, stored in said terminal based on the track of a touch stroke if the touch starts at one of the outer vertices pre-laid out on said touch input device on said terminal, and ends at one of said outer vertices without passing the center point; and processing a user command corresponding to the checked key value.

9. A user interface method of Claim 8, wherein, in said touch-track-to-key value table, a character key value is assigned to said touch when passing through said center point, otherwise a non-character key value is assigned to said touch.

10. A user interface method of Claim 8, wherein said touch input device is a touch screen, and said center point and the set of said outer vertices are displayed on said touch screen.

11. A user interface method of Claim 10, wherein guidelines connecting said center point with said set of outer vertices are displayed on said touch screen.

12. A user interface method of Claim 8, wherein said touch input device is a touch pad, and said center point and said set of outer vertices are displayed on said touch pad.

13. A user interface method of Claim 12, wherein guidelines connecting said center point with said set of outer vertices are displayed on said touch pad.

14. A recorded medium recorded with a program for executing said user interface method in accordance with any one of Claims 8 through 13, said recorded medium being readable by a computer.
